# EUROPÄISCHE PATENTSCHRIFT

(11) **EP 4 401 203 B1**
(45) Veröffentlichungstag und Bekanntmachung des Hinweises auf die Patenterteilung: **30.07.2025**
(21) Anmeldenummer: 24172520.9
(22) Anmeldetag: 01.06.2023
(51) Int. Cl.: H01M 10/6568

(54) **FLUIDVERTEILUNGSSYSTEM, BATTERIEMODULANORDNUNG UND VERFAHREN ZUM FLUIDLEITENDEN VERBINDEN VON BATTERIEMODULEN IN EINER BATTERIEMODULANORDNUNG**
FLUID DISTRIBUTION SYSTEM, BATTERY MODULE ASSEMBLY AND METHOD FOR FLUID-CONDUCTIVELY CONNECTING BATTERY MODULES IN A BATTERY MODULE ASSEMBLY
SYSTÈME DE DISTRIBUTION DE FLUIDE, ENSEMBLE MODULE DE BATTERIE ET PROCÉDÉ DE CONNEXION DE MANIÈRE FLUIDIQUE DE MODULES DE BATTERIE DANS UN ENSEMBLE MODULE DE BATTERIE

(30) Priorität: 13.06.2022 DE 102022114847
(43) Veröffentlichungstag der Anmeldung: 17.07.2024
(62) Teilanmeldung aus: 23176773.2
(73) Patentinhaber: Witzenmann GmbH, 75175 Pforzheim (DE)
(72) Erfinder: LEIPPI, Alexander, 75177 Pforzheim (DE)
(74) Vertreter: LBP Lemcke, Brommer & Partner Patentanwälte mbB

(56) Entgegenhaltungen:
- CN-A- 111 048 865
- CN-U- 207 690 952
- CN-U- 212 584 519
- CN-U- 214 254 542
- US-A1- 2020 361 289

## Beschreibung

Die Erfindung betrifft ein Fluidverteilungssystem für eine Batteriemodulanordnung, bei der die Batteriemodule jeweils wenigstens einen ersten Fluidanschluss und jeweils wenigstens einen zweiten Fluidanschluss aufweisen, gemäß Anspruch 1.

Außerdem betrifft die Erfindung mit dem Anspruch 11 eine Batteriemodulanordnung mit einer Anzahl von Batteriemodulen, deren Fluidanschlüsse an ein erfindungsgemäßes Fluidleitungssystem angeschlossen sind.

Schließlich betrifft die Erfindung mit dem Anspruch 13 auch ein Verfahren zum fluidleitenden Verbinden von Batteriemodulen in einer erfindungsgemäßen Batteriemodulanordnung.

Im Rahmen der sich immer weiter durchsetzenden Elektromobilität ist es erforderlich, die zu Antriebszwecken verwendeten Batteriemodule während des Betriebs zu temperieren, insbesondere zu kühlen. Zu diesem Zweck weisen die Batteriemodule regelmäßig einen ersten Fluidanschluss und einen zweiten Fluidanschluss auf, die dazu bestimmt sind, ein Temperierfluid (Kühlfluid) in das Batteriemodul ein- und wieder auszuleiten, um das Batteriemodul mithilfe des Temperierfluids zu temperieren bzw. zu kühlen.

Hierfür müssen die Batteriemodule mit einem geeigneten Fluidverteilungssystem in Verbindung stehen, um das Temperierfluid zuführen und wieder abführen zu können.

Vorbekannte Fluidverteilungssystem dieser Art sind in der Regel kompliziert aufgebaut, verwenden eine große Vielzahl verschiedener Einzelteile und sind bei der Herstellung komplex und entsprechend kostenaufwändig. Deshalb ist aktuell die Montierbarkeit derartiger Fluidverteilungssystem schwierig und eine Wartung insbesondere mit einem Modultausch (Austausch eines oder mehrerer Batteriemodule) nur eingeschränkt möglich.

Aus der CN 207 690 952 U ist ein Fluidleitungssystem zum Temperieren einer Batteriemodulanprdnung, die mehrere Batteriemodule umfasst, vorbekannt.

Insbesondere leiden vorbekannte Fluidverteilungssystem darunter, dass die sogenannte Hauptverteilungsleitung oder Mainpipe aus horizontal gesteckten starren Einzelteilen besteht, sodass bei einem Modultausch eine Demontage des kompletten Leitungssystems erforderlich ist. Die Installation eines regelmäßig außerdem noch vorhandenen Busbars (für die elektrische Versorgung und Kommunikation) ist dabei zwingend mit der Leitungsinstallation gekoppelt, was die Handhabbarkeit weiter erschwert.

Der Erfindung liegt die Aufgabe zugrunde, ein Fluidverteilungssystem, eine Batteriemodulanordnung und ein Verfahren der jeweils oben genannten Art anzugeben, das bzw. die gegenüber dem bekannten Stand der Technik vereinfacht ausgebildet ist und sich deshalb durch eine vereinfachte Handhabbarkeit und geringere Herstellungs- sowie Wartungskosten auszeichnet.

Die Aufgabe wird erfindungsgemäß gelöst durch ein Fluidverteilungssystem mit den Merkmalen des Anspruchs 1, durch eine Batteriemodulanordnung mit den Merkmalen des Anspruchs 11 sowie durch ein Verfahren mit den Merkmalen des Anspruchs 13.

Vorteilhafte Weiterbildungen sind in den jeweiligen Unteransprüchen definiert.

Ein erfindungsgemäßes Fluidverteilungssystem für eine Batteriemodulanordnung, bei der die Batteriemodule jeweils wenigstens einen ersten Fluidanschluss und jeweils wenigstens einen zweiten Fluidanschluss aufweisen, umfasst:
ein erstes Hauptleitungselement, von dem wenigstens ein erster Verzweigungsleitungsabschnitt abzweigt, vorzugsweise rechtwinklig;
ein zweites Hauptleitungselement, von dem wenigstens ein zweiter Verzweigungsleitungsabschnitt abzweigt, vorzugsweise rechtwinklig;
ein erstes Verbindungselement, das mit dem Verzweigungsleitungsabschnitt des ersten Hauptleitungselements lösbar verbunden oder verbindbar ist;
ein zweites Verbindungselement, das mit dem Verzweigungsleitungsabschnitt des zweiten Hauptleitungselements lösbar verbunden oder verbindbar ist; welches erste Verbindungselement eine erste Krümmung aufweist, um eine Verlaufsrichtung des ersten Verzweigungsleitungsabschnitts an eine Verlaufsrichtung des ersten Fluidanschlusses anzugleichen;
welches zweite Verbindungselement eine zweite Krümmung aufweist, um eine Verlaufsrichtung des zweiten Verzweigungsleitungsabschnitts an eine Verlaufsrichtung des zweiten Fluidanschlusses anzugleichen.

Das erfindungsgemäße Fluidverteilungssystem weist weiterhin noch wenigstens ein flexibles Leitungselement, vorzugsweise einen Wellschlauch, auf, das zum lösbaren Verbinden zweier erster oder zweiter Hauptleitungselemente bestimmt und ausgebildet ist, um die genannten Hauptleitungselemente bzw. die betreffenden Knotenelemente miteinander zu einem komplexeren Fluidverteilungssystem zu verbinden, das mehrere Batteriemodule miteinander fluidleitend verbindet.

Eine solche Ausgestaltung ermöglicht nicht nur den Ausgleich von Toleranzen, sondern auch einen nachträglichen Ein- und Ausbau einzelner Batteriemodule ohne Demontage des kompletten Fluidverteilungssystems.

Außerdem ist es nicht erforderlich, dass sich alle Batteriemodule auf einem gleichen Höhenniveau oder in perfekt fluchtender Anordnung befinden, weil mittels der flexiblen Leitungselemente ein entsprechender Ausgleich einfach erreicht werden kann.

Eine erfindungsgemäße Batteriemodulanordnung mit einer Anzahl von Batteriemodulen zeichnet sich dadurch aus, dass die Fluidanschlüsse der Batteriemodule an ein erfindungsgemäßes Fluidleitungssystem angeschlossen sind, wobei vorzugsweise ein jeweiliger erster Fluidanschluss mit dem ersten Hauptleitungselement und ein jeweiliger zweiter Fluidanschluss mit dem zweiten Hauptleitungselement verbunden ist.

Ein erfindungsgemäßes Verfahren zum fluidleitenden Verbinden von Batteriemodulen in einer erfindungsgemäßen Batteriemodulanordnung zeichnet sich dadurch aus, dass:
a) die Batteriemodule zunächst in einer dafür vorgesehenen Aufnahmestruktur angeordnet werden und vorzugsweise elektrisch miteinander verbunden werden; dann
b) die Fluidanschlüsse der Batteriemodule mit den jeweiligen Verbindungselementen verbunden werden; dann
c) die Hauptleitungselemente über ihre Verzweigungsleitungsabschnitte mit den Verbindungselementen verbunden werden; und dann
d) die Hauptleitungselemente untereinander verbunden werden, vorzugsweise mittels flexibler Leitungselemente, vorzugsweise mittels (Ring-) Wellschläuchen.

Auf diese Weise schafft die Erfindung eine modulare Lösung zur fluidtechnischen Anbindung der Batteriemodule, was mit der Möglichkeit einer kostengünstigen Gleichteileverwendung und einer entkoppelten Busbar-Montage bzw. -Demontage einhergeht.

Es wird im Rahmen der vorliegenden Erfindung entsprechend vorgeschlagen, ein Fluidverteilungssystem zu verwenden, welches aus sogenannten Knotenelementen und die Knotenelemente verbindenden Verbindungsleitungen gebildet werden kann.

Die genannten Knotenelemente umfassen die weiter oben definierten Hauptleitungselemente mit den jeweiligen Verzweigungsleitungsabschnitten und den damit verbundenen bzw. verbindbaren Verbindungselementen.

Die Knotenelemente bilden die Majorität der Komplexität des Systems ab, indem sie wechselseitige Fluiddistribution zu und von den Batteriemodulen ermöglichen und selbst vorzugsweise als Gleichteile ausgebildet bzw. aus einer Anzahl von Gleichteile gebildet sind.

Die Knotenelemente sind vorzugsweise durch eine Translation montierbar und weisen bevorzugt flexible Elemente bzw. Abschnitte zum Toleranzausgleich zwischen den einzelnen Fluidübergabepunkten auf.

Die bereits erwähnten Verbindungsleitungen, bei denen es sich erfindungsgemäß um flexible Leitungselemente handelt, die dazu dienen, die Hauptleitungselemente der Knotenelemente (paarweise) miteinander zu verbinden, sind bevorzugt modular aufgebaut und endständig mit Kupplungen versehen, die eine fluiddichte Verbindung mit den Knotenelementen (insbesondere mit den dortigen Hauptleitungselementen) erlauben und vorzugsweise lösbar und gesichert bzw. sicherbar ausgestaltet sind.

Für eine besonders einfache Montage sind diese Verbindungen vorzugsweise so ausgestaltet, dass sie über eine Translation hergestellt werden können.

Die Erfindung sieht vor, die Verbindungsleitungen zumindest teilweise bzw. abschnittweise flexibel auszugestalten, um Montagetoleranzen auszugleichen und den Tausch einzelner Elemente zu erlauben, ohne zuvor das komplette Fluidverteilungssystem demontieren zu müssen. Die genannte Flexibilität wird hierbei vorzugsweise durch ein Balgelement und höchst vorzugsweise durch einen Metallschlauch, insbesondere Ringwellschlauch, erreichten.

Die nachfolgend beschriebenen Weiterbildungen der Erfindung haben sich als besonders vorteilhaft erwiesen:
Bei einer Weiterbildung des erfindungsgemäßen Fluidverteilungssystems ist vorgesehen, dass das erste Hauptleitungselement und/oder das zweite Hauptleitungselement einen flexiblen Leitungsabschnitt umfasst, vorzugsweise einen gewellten Abschnitt, höchst vorzugsweise ringgewellt.

Hierdurch lassen sich - wie schon erwähnt - Montagetoleranzen sowie temperaturbedingte Längenänderungen während des Betriebs ausgleichen.

Bei einer anderen Weiterbildung des erfindungsgemäßen Fluidverteilungssystems ist vorgesehen, dass das erste Hauptleitungselement und/oder das zweite Hauptleitungselement an seinen Enden Anschlussstrukturen zum lösbaren Verbinden mit jeweils einem weiteren Hauptleitungselement aufweisen, vorzugsweise unterschiedliche, höchst vorzugsweise zueinander komplementäre Anschlussstrukturen.

Dies trägt zum Erreichen des gewünschten modularen Aufbaus des Fluidverteilungssystems bei.

Bei wieder einer anderen Weiterbildung des erfindungsgemäßen Fluidverteilungssystems ist vorgesehen, dass das erste Hauptleitungselement und das zweite Hauptleitungselement mitsamt dem jeweiligen Verzweigungsleitungsabschnitt in einem Metall ausgebildet ist, vorzugsweise Stahl, höchst vorzugsweise Edelstahl.

Eine solche Materialwahl hat sich in der Praxis als besonders günstig und widerstandsfähig erwiesen und ermöglicht einen dünnwandigen Aufbau mit geringem Gewicht.

Eine äußerst vorteilhafte Weiterbildung des erfindungsgemäßen Fluidverteilungssystems sieht vor, dass das erste Verbindungselement und das zweite Verbindungselement in einem Kunststoff ausgebildet sind, vorzugsweise einem spritzgießfähigen Kunststoff.

Eine solche Materialwahl ermöglicht insbesondere die Herstellung komplexerer Geometrien, die zum Schaffen einer Verbindung mit den Batteriemodulen erforderlich sein können.

Eine andere vorteilhafte Weiterbildung des erfindungsgemäßen Fluidverteilungssystems sieht vor, dass das erste Hauptleitungselement wenigstens zwei erste Verzweigungsleitungsabschnitte und das zweite Hauptleitungselement wenigstens zwei zweite Verzweigungsleitungsabschnitte aufweist.

Eine solche Ausgestaltung der Hauptleitungselemente bzw. der darauf aufbauenden Knotenelemente ermöglicht den Anschluss zweier Batteriemodule, die vorzugsweise eng benachbart und höchst vorzugsweise einander gegenüberliegend angeordnet sein können. Dabei können die Verzweigungsleitungsabschnitte des einen Hauptleitungselements zum Zuführen von Temperierfluid zu den (beiden) Batteriemodulen dienen, während die Verzweigungsleitungsabschnitte des anderen Hauptleitungselements zum Abführen des Temperierfluids aus den (beiden) Batteriemodulen bestimmt sind. Das eine Hauptleitungselement dient somit insgesamt zum Zuführen des Temperierfluids, während das andere Hauptleitungselement somit insgesamt zum Abführen des Temperierfluids bestimmt ist.

Ein besonders einfacher Aufbau des erfindungsgemäßen Fluidverteilungssystems ergibt sich, wenn bei einer entsprechenden Weiterbildung die beiden ersten Verzweigungsleitungsabschnitte und/oder die beiden zweiten Verzweigungsleitungsabschnitte gleich lang ausgebildet sind und/oder parallel zueinander verlaufen.

Außerdem ist es auf diese Weise grundsätzlich möglich, das betreffende Hauptleitungselement zu verwenden, ohne bei der Montage weiter auf dessen Orientierung achten zu müssen, was den Montageprozess vereinfacht.

Eine wieder andere Weiterbildung des erfindungsgemäßen Fluidverteilungssystems sieht vor, dass die beiden ersten Verzweigungsleitungsabschnitte eine andere Länge aufweisen als die beiden zweiten Verzweigungsleitungsabschnitte.

Die beiden Hauptleitungselemente sind demnach bei dieser Weiterbildung nicht vollständig identisch ausgebildet, sondern unterscheiden sich hinsichtlich der Länge ihrer Verzweigungsleitungsabschnitte, die allerdings vorzugsweise für ein gegebenes Hauptleitungselement jeweils gleich lang ausgebildet sind.

Auf diese Weise ist es beispielsweise möglich, die Zufuhr von Temperierfluid zu den Batteriemodulen und die Abfuhr von Temperierfluid aus den Batteriemodulen auf unterschiedlichen Ebenen oder Höhenniveaus auszubilden, indem zwei verschiedenen Hauptleitungselemente verwendet werden, wie vorstehend skizziert.

Um auch hier für den benötigten Toleranzausgleich zu sorgen, hat es sich als vorteilhaft erwiesen, wenn bei einer entsprechenden Weiterbildung des erfindungsgemäßen Fluidverteilungssystems zwischen einer jeweiligen Abzweigung der beiden ersten Verzweigungsleitungsabschnitte und/oder der beiden zweiten Verzweigungsleitungsabschnitte ein flexibler Leitungsabschnitt des betreffenden Hauptleitungselements angeordnet ist, wobei der flexibler Leitungsabschnitt beispielsweise als (Ring-) Wellschlauch-Abschnitt ausgebildet sein kann.

Eine äußerst bevorzugte Weiterbildung des erfindungsgemäßen Fluidverteilungssystems zeichnet sich dadurch aus, dass jeder der ersten Verzweigungsleitungsabschnitte mit einem jeweiligen ersten Verbindungselement lösbar verbunden oder verbindbar ist und dass jeder der zweiten Verzweigungsleitungsabschnitte mit einem jeweiligen zweiten Verbindungselement lösbar verbunden oder verbindbar ist.

Die genannten ersten bzw. zweiten Verbindungselemente stellen die Fluidverbindung zu den Batteriemodulen sicher. Wenn die entsprechenden Verbindungen lösbar ausgestaltet sind, erleichtert dies die Montage bzw. Demontage.

In der Praxis hat sich eine Ausgestaltung des erfindungsgemäßen Fluidverteilungssystems als besonders vorteilhaft erwiesen, bei der das eine erste Verbindungselement für das Verbinden mit dem ersten Fluidanschluss eines ersten Batteriemoduls und das andere erste Verbindungselement für das Verbinden mit dem ersten Fluidanschluss eines zweiten Batteriemoduls ausgebildet und bestimmt ist; und bei der das eine zweite Verbindungselement für das Verbinden mit dem zweiten Fluidanschluss des ersten Batteriemoduls und das andere zweite Verbindungselement für das Verbinden mit dem zweiten Fluidanschluss des zweiten Batteriemoduls ausgebildet und bestimmt ist.

Auf diese Weise dient das eine Hauptleitungselement mit den daran angeschlossenen Verbindungselementen ausschließlich zum Verbinden mit einer Art von Fluidanschluss (Zufuhr oder Abfuhr von Temperierfluid) der Batteriemodule, während das andere Hauptleitungselement mit den daran angeschlossenen Verbindungselementen ausschließlich zum Verbinden mit einer anderen Art von Fluidanschluss bestimmt ist. Auch dies erleichtert den modularen Aufbau des Fluidverteilungssystems.

Es wurde bereits darauf hingewiesen, dass vorteilhafterweise die Anbindung an die Batteriemodule auf unterschiedlichen Ebenen oder Höhenniveaus erfolgt. Eine entsprechende Weiterbildung des erfindungsgemäßen Fluidverteilungssystems sieht vor, dass das eine erste Verbindungselement und das andere erste Verbindungselement an ihrem einen Ende jeweils eine Anschlussstruktur für ein Batteriemodul aufweisen, welche Anschlussstrukturen auf einem selben ersten Höhenniveau angeordnet sind; und dass das eine zweite Verbindungselement und das andere zweite Verbindungselement an ihrem einen Ende jeweils eine Anschlussstruktur für ein Batteriemodul aufweisen, welche Anschlussstrukturen auf einem selben zweiten Höhenniveau angeordnet sind; wobei vorzugsweise das erste Höhenniveau und das zweite Höhenniveau unterschiedlich sind.

Die angesprochene Nutzung unterschiedlicher Höhenniveaus ermöglicht eine verbesserte Ausnutzung des insbesondere im Automobilbereich regelmäßig knappen verfügbaren Bauraums sowie die Anpassung an eine vorgegebene Lage der Fluidanschlüsse bei den verwendeten Batteriemodulen.

Eine besonders vorteilhafte weitere Ausgestaltung des erfindungsgemäßen Fluidverteilungssystems sieht außerdem vor, dass das eine erste Verbindungselement und das andere erste Verbindungselement an ihrem anderen Ende jeweils eine Anschlussstruktur für einen Verzweigungsleitungsabschnitt aufweisen, welche Anschlussstrukturen auf einem selben dritten Höhenniveau angeordnet sind; und dass das eine zweite Verbindungselement und das andere zweite Verbindungselement an ihrem anderen Ende jeweils eine Anschlussstruktur für einen Verzweigungsleitungsabschnitt aufweisen, welche Anschlussstrukturen auf einem selben vierten Höhenniveau angeordnet sind; wobei vorzugsweise das dritte Höhenniveau und das vierte Höhenniveau unterschiedlich sind.

Auf diese Weise kann eine Anpassung an eine bestimmte Länge der Verbindungsleitungsabschnitte eines jeweiligen Hauptleitungselements erfolgen, worauf weiter oben schon eingegangen wurde.

Um die Montagefreundlichkeit der vorgeschlagenen Anordnung weiter zu verbessern, sieht eine wieder andere Weiterbildung des erfindungsgemäßen Fluidverteilungssystems vor, dass das eine erste Verbindungselement und das eine zweite Verbindungselement, die bevorzugt zum Verbinden mit einem selben Batteriemodul bestimmt sind, zu einer gemeinsam handhabbaren Einheit miteinander verbunden oder verbindbar sind; und/oder dass das andere erste Verbindungselement und das andere zweite Verbindungselement, die bevorzugt ebenfalls zum Verbinden mit einem selben Batteriemodul bestimmt sind, zu einer gemeinsam handhabbaren Einheit miteinander verbunden oder verbindbar sind.

Beispielsweise kann die genannte Verbindung über eine (Spritzguss-) Brücke zwischen den genannten Verbindungselementen erfolgen, die direkt bei der Herstellung mit ausgebildet oder nachträglich (mittels eines separaten Verbindungsteils) geschaffen werden kann.

Als in der Praxis besonders vorteilhaft hat sich eine Weiterbildung des erfindungsgemäßen Fluidverteilungssystems erwiesen, bei der eines der beiden ersten Verbindungselemente und eines der beiden zweiten Verbindungselemente als Gleichteile ausgebildet sind; und/oder bei der das andere der beiden ersten Verbindungselemente und das andere der beiden zweiten Verbindungselemente als Gleichteile ausgebildet sind.

Die Verwendung einer geringeren Anzahl unterschiedlicher Bauteile vereinfacht die Lagerhaltung und kann so zu einer weiteren Kostensenkung beitragen.

Eine bevorzugte Weiterbildung der erfindungsgemäßen Batteriemodulanordnung sieht vor, dass diese mehrere Batteriemodule umfasst, die einander paarweise möglichst genau gegenüberliegend angeordnet sind, wobei die Fluidanschlüsse der Batteriemodule jeweils aufeinander zu weisen, und wobei ein Paar gegenüberliegender Batteriemodule das weiter oben erwähnte erste Batteriemodul und das weiter oben ebenfalls erwähnte zweite Batteriemodul bilden.

Noch eine andere Weiterbildung der erfindungsgemäßen Batteriemodulanordnung sieht vor, dass die Batteriemodule in einer Ebene angeordnet sind und zumindest einige der Batteriemodule unterschiedlich Abmessungen in einer Richtung parallel zu der Ebene und/oder senkrecht zu der Ebene aufweisen, wobei ein Versatz zwischen den betreffenden ersten und zweiten Hauptleitungselementen mittels flexiblen Leitungselementen, vorzugsweise (Ring-) Wellschläuchen, ausgeglichen ist.

Die schafft eine größtmögliche Flexibilität bei der räumlichen Anordnung von Batteriemodulen innerhalb der Batteriemodulanordnung.

Eine besonders große Vereinfachung bei der Montage des erfindungsgemäßen Fluidverteilungssystems bzw. bei der Schaffung der erfindungsgemäßen Batteriemodulanordnung ergibt sich, wenn in Weiterbildung des erfindungsgemäßen Verfahrens die Batteriemodule in einer Konfiguration in einer Ebene angeordnet werden, wie weiter oben detailliert beschrieben; und die Verbindungselemente in Schritt b) und/oder die Hauptleitungselemente in Schritt c) senkrecht zu der Ebene in einen Bereich zwischen den einander gegenüberliegenden Batteriemodulen eingebracht werden.

Weitere Vorteile und Eigenschaften der Erfindung ergeben sich aus der nachfolgenden Beschreibung von bevorzugten Ausführungsbeispielen anhand der Zeichnung.
- Figur 1: zeigt schematisch eine erfindungsgemäße Batteriemodulanordnung mit einem erfindungsgemäßen Fluidverteilungssystem;
- Figur 2: zeigt exemplarisch ein Hauptleitungselement, wie es in einem erfindungsgemäßen Fluidverteilungssystem verwendet werden kann;
- Figur 3: zeigt exemplarisch zwei Verbindungselemente für ein erfindungsgemäßes Fluidverteilungssystem;
- Figur 4: zeigt ein sogenanntes Knotenelement als Bestandteil eines erfindungsgemäßen Fluidverteilungssystems;
- Figur 5: zeigt das Knotenelement aus Figur 4 in einer etwas anderen Ansicht;
- Figur 6: zeigt ein anderes Knotenelement als Bestandteil eines erfindungsgemäßen Fluidverteilungssystems; und
- Figuren 7 und 8: zeigen die Verwendung von flexiblen Leitungselementen zum Verbinden der Knotenelemente gemäß den Figuren 4 bis 6.

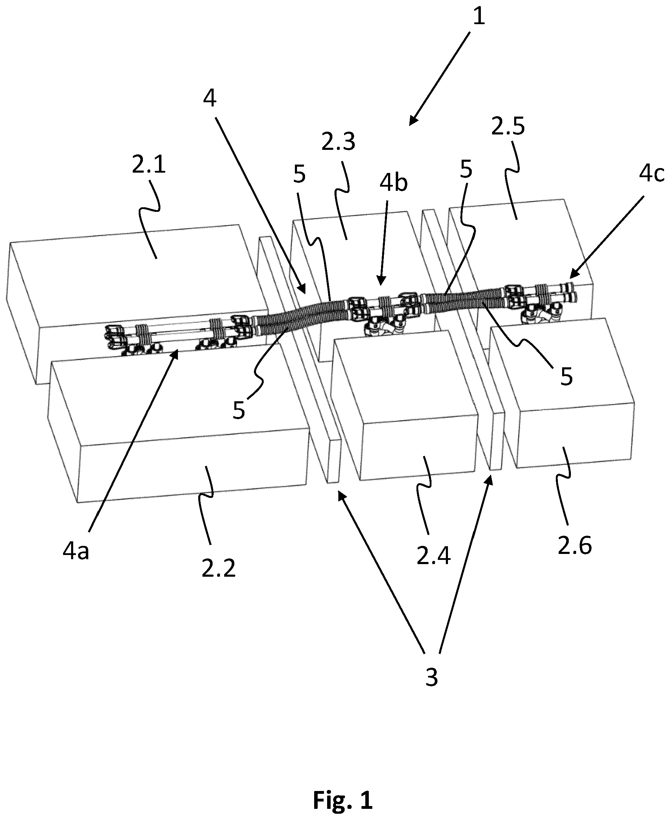

Figur 1 zeigt schematisch eine erfindungsgemäße Batteriemodulanordnung mit einem erfindungsgemäßen Fluidverteilungssystem.

Die Batteriemodulanordnung ist insgesamt mit dem Bezugszeichen 1 bezeichnet und umfasst vorliegend (ohne jede Beschränkung hinsichtlich der Anzahl) sechs Batteriemodule, die mit den Bezugszeichen 2.1 bis 2.6 bezeichnet sind. Die Batteriemodule 2.1-2.6 sind in einer hierfür geeigneten Aufnahmestruktur angeordnet, die in Figur 1 bei Bezugszeichen 3 nur stark vereinfacht dargestellt ist.

Die Batteriemodule 2.1 und 2.2 weisen andere Abmessungen in Höhe und Breite auf als die anderen Batteriemodule 2.3 bis 2.6.

Die Batteriemodule 2.1 und 2.2 besitzen jeweils zwei erste und zwei zweite Fluidanschlüsse, während die weiteren Batteriemodule jeweils nur einen ersten und einen zweiten Fluidanschluss aufweisen. Dies ist in Figur 1 aufgrund der gewählten Darstellung nicht im Detail zu erkennen.

Beispielsweise und ohne Beschränkung dienen die ersten Fluidanschlüsse zum Einleiten eines Temperierfluids in das jeweilige Batteriemodul 2.1-2.6, während die zweiten Fluidanschlüsse zum Ausleiten des Temperierfluids aus dem jeweiligen Batteriemodul 2.1-2.6 bestimmt sind.

Das erfindungsgemäße Fluidverteilungssystem ist insgesamt mit dem Bezugszeichen 4 bezeichnet. Es umfasst gemäß Figur 1 drei sogenannte Knotenelemente 4a bis 4c, wobei das Knotenelement 4a anders ausgebildet ist als die Knotenelemente der 4b und 4c.

Die Knotenelemente 4a-4c sind fluidleitend mit den genannten Fluidanschlüssen der Batteriemodule 2.1-2.6 verbunden. Untereinander sind die Knotenelemente 4a und 4b bzw. 4b und 4c miteinander über flexible Leitungselemente in Form von (Ring-) Wellschläuchen 5 fluidleitend verbunden, wodurch sich insbesondere Höhenunterschiede zwischen den Batteriemodulen, beispielsweise zwischen den Batteriemodulen 2.1 und 2.2 einerseits und den Batteriemodulen 2.3 und 2.4 andererseits, ausgleichen lassen. Außerdem besteht die Möglichkeit, die Batteriemodule 2.1 bis 2.6 zunächst mit den zugehörigen Knotenelementen 4a-4c auszustatten und erst danach die Knotenelemente 4a-4c in der gezeigten Weise miteinander zu verbinden. Des Weiteren erlaubt die Verwendung flexibler Leitungselemente 5 den nachträglichen Austausch einzelner Batteriemodule 2.1 bis 2.6 ohne Demontage des kompletten Fluidverteilungssystems 4.

Es wird nun im Folgenden auf die einzelnen Bestandteile der in Figur 1 gezeigten Knotenelemente 4a bis 4c näher eingegangen. Wie im einleitenden Teil bereits detailliert beschrieben, umfassen die Knotenelemente mehrere Bestandteile, nämlich erste und zweite Hauptleitungselemente, von den genannten Hauptleitungselementen abgezweigte erste und zweite Verzweigungsleitungsabschnitte sowie erste bzw. zweiten Verbindungselemente, die mit dem jeweiligen Verbindungsleitungsabschnitt des betreffenden Hauptleitungselements verbunden oder verbindbar sind.

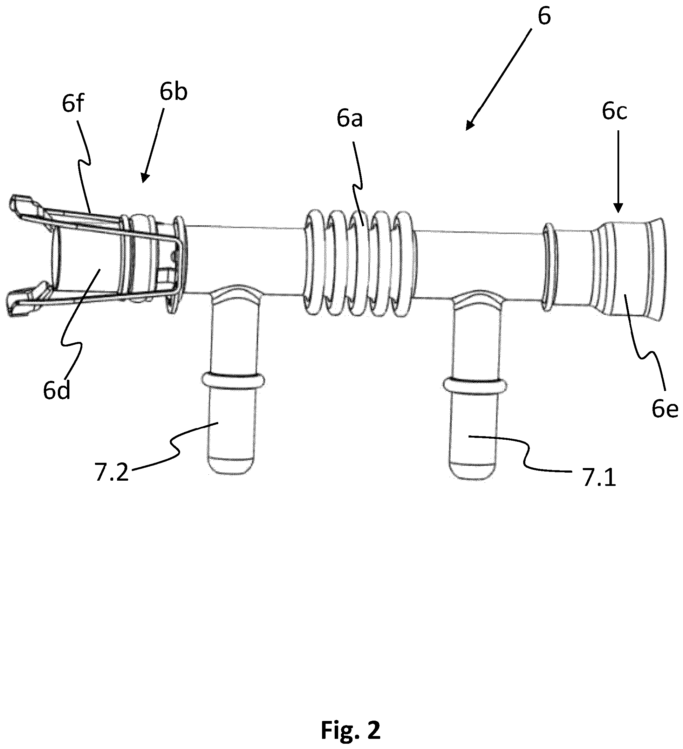

Figur 2 zeigt nun zunächst ein Hauptleitungselement 6 mit zwei rechtwinklig davon abgezweigten Verbindungsleitungsabschnitten 7.1, 7.2, die entsprechend jeweils unter einem rechten Winkel von dem Hauptleitungselement 6 abragen. Bei dem gezeigten Hauptleitungselement 6 kann es sich grundsätzlich um ein erstes oder um ein zweites Hauptleitungselement handeln, weil sie diese bei dem gezeigten Ausführungsbeispiel nur hinsichtlich einer Länge der Verbindungsleitungsabschnitte 7.1, 7.2 unterscheiden.

Zwischen den Abzweigungsstellen für die Verbindungsleitungsabschnitte 7.1, 7.2 weist das Hauptleitungselement 6 einen flexiblen, vorliegend ringgewellten Abschnitt 6a auf. An seinen beiden freien Enden 6b, 6c weist das Hauptleitungselement 6 jeweils eine Anschlussstruktur 6d, 6e zum lösbaren Verbinden mit jeweils einem weiteren Hauptleitungselement 6 auf, vorzugsweise unterschiedliche, höchst vorzugsweise zueinander komplementäre Anschlussstrukturen 6d, 6e. Die Verbindung zwischen den genannten Hauptleitungselementen 6 kann in der Praxis bevorzugt unter Zwischenschaltung der bereits erwähnten flexiblen Leitungselemente 5 erfolgen, worauf bereits hingewiesen wurde (vergleiche Figur 1).

In Figur 2 ist die Anschlussstruktur bei Bezugszeichen 6d zum Aufstecken eines flexiblen Leitungselements ausgebildet und weist eine (außenliegende) Sicherungseinrichtung 6f zum Sichern der Verbindung auf. Die Erfindung ist jedoch keinesfalls auf derartige (außenliegende) Sicherungseinrichtungen beschränkt. Die Anschlussstruktur bei Bezugszeichen 6e ist hierzu komplementär ausgebildet und umfasst eine endständige Aufweitung, in die ein flexibles Leitungselement eingesteckt werden kann. Die zugehörige Sicherheitseinrichtung befindet sich dann an dem flexiblen Leitungselement (in Figur 2 nicht gezeigt).

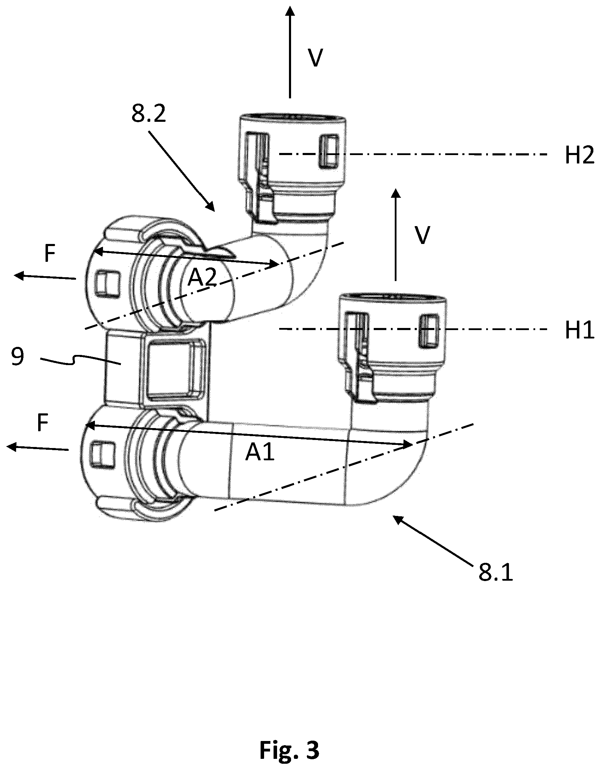

Figur 3 zeigt weitere Bestandteile der genannten Knotenelemente. Hierbei handelt es sich um zwei sogenannte Verbindungselemente 8.1, 8.2, die jeweils dazu ausgebildet und bestimmt sind, mit einem Verbindungsleitungsabschnitt eines Hauptleitungselements (vergleiche Figur 2) lösbar verbunden zu werden. Die Verbindung erfolgt hierbei gemäß den Pfeilen V. Beide Verbindungselemente 8.1, 8.2 weisen eine (mehrfache) Krümmung auf, um eine Verlaufsrichtung des betreffenden Verbindungsleitungsabschnitts an eine Verlaufsrichtung des betreffenden Fluidanschlusses eines Batteriemoduls (in Figur 3 nicht gezeigt) anzugleichen. Verbindung mit den genannten Fluidanschlüssen erfolgt hierbei gemäß den Pfeilen F, ebenfalls vorzugsweise lösbar.

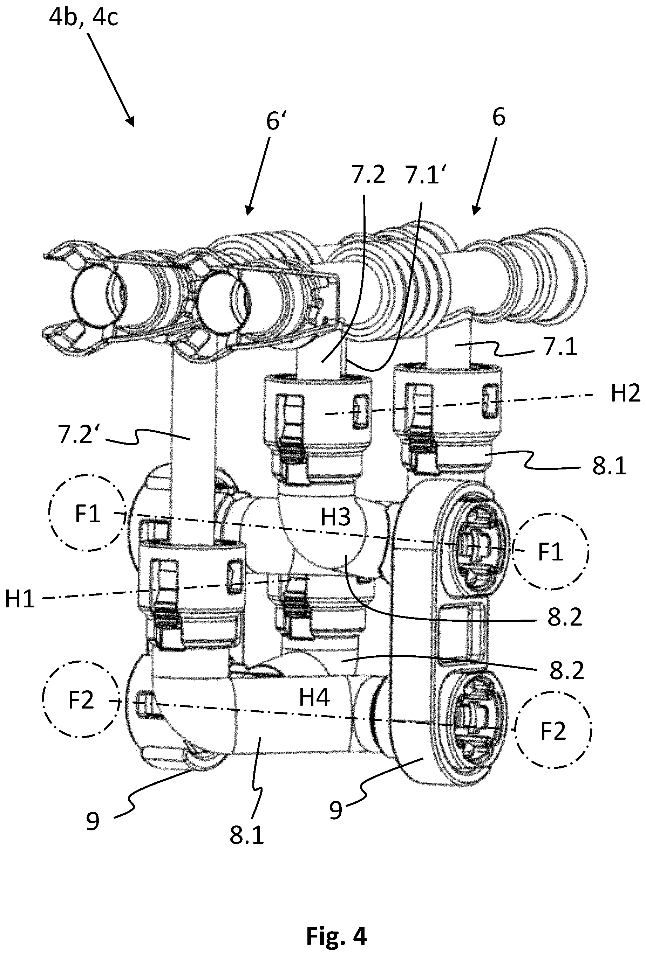

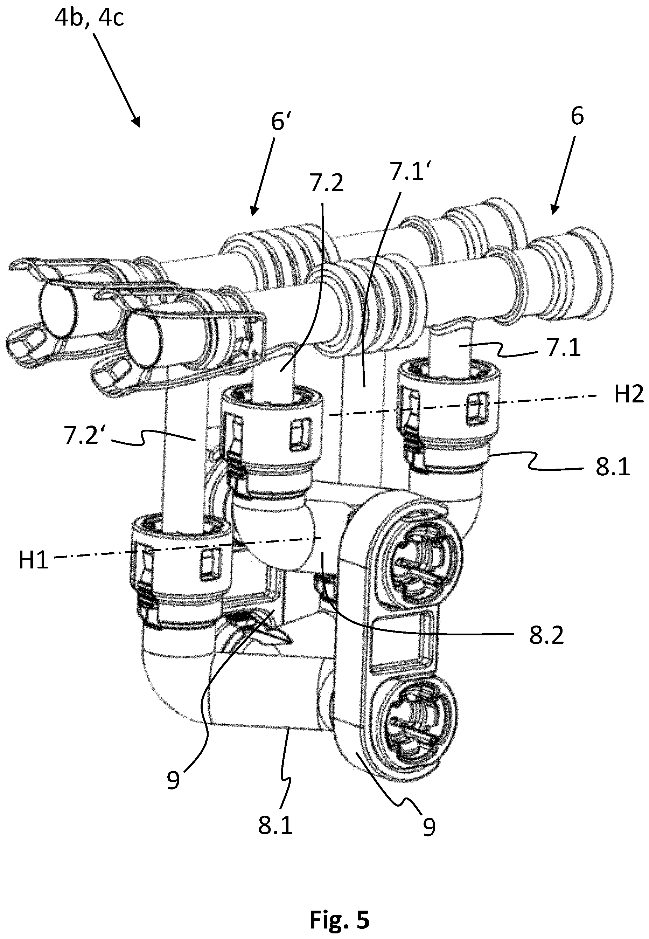

Wie man der Figur 3 noch entnimmt, befinden sich die Anschlussenden zum Verbinden mit den genannten Verbindungsleitungsabschnitten auf unterschiedlichen Höhenniveaus H1, H2. Außerdem befinden sich die genannten Anschlussenden auch bei unterschiedlichen seitlichen Abständen A1, A2 bezüglich des jeweils anderen Anschlussendes zum Verbinden mit den genannten Fluidanschlüssen. Wenn die in Figur 3 gezeigte Ausgestaltung mit einer leicht abgewandelten Ausgestaltung zusammen verwendet wird, bei welcher abgewandelten Ausgestaltung die beiden Verbindungselemente 8.1, 8.2 vertauscht angeordnet sind, lässt sich eine Konfiguration erreichen, bei der gleiche Fluidanschlüsse unterschiedlicher Batteriemodule bezüglich der jeweiligen Anschlussenden zum Verbinden mit den genannten Verbindungsleitungsabschnitten sich jeweils auf gleichen Höhenniveaus und bei gleichen seitlichen Abständen befinden. Dies wird weiter unten anhand der Figuren 4 und 5 noch deutlicher erkennbar.

Gemäß Figur 3 sind die beiden Verbindungselemente 8.1, 8.2 über ein separates Verbindungsteil 9 lösbar miteinander verbunden und stellen so zu Handhabungszwecken vorteilhafter Weise eine bauliche Einheit dar.

Figuren 4 und 5 zeigen ein vollständiges Knotenelement 4b, 4c (vergleiche Figur 1), das aus zwei Hauptleitungselementen 6, 6' (die im Rahmen der vorliegenden Erfindung auch als erstes Hauptleitungselement bzw. als zweites Hauptleitungselement bezeichnet werden) analog zu Figur 2 und vier Verbindungselementen 8.1, 8.2 mitsamt den zugehörigen Verbindungsteilen 9 gemäß Figur 3 zusammengesetzt ist. Die beiden Hauptleitungselemente 6, 6' unterscheiden sich hinsichtlich der Länge ihrer jeweiligen Verbindungsleitungsabschnitte 7.1, 7.2 bzw. 7.1', 7.2'; dabei entspricht das Hauptleitungselement 6 gemäß Figur 4 und Figur 5 genau dem Hauptleitungselement 6 aus Figur 2 (mit relativ kurzen Verbindungsleitungsabschnitten 7.1, 7.2), während das andere Hauptleitungselement 6' demgegenüber längere Verbindungsleitungsabschnitte 7.1', 7.2' aufweist. Die Verbindungsleitungsabschnitte 7.1, 7.2, die von dem ersten Hauptleitungselement 6 abgehen, werden vorliegend auch als erste Verbindungsleitungsabschnitte bezeichnet, während die Verbindungsleitungsabschnitte 7.1', 7.2', die von dem zweiten Hauptleitungselement 6' abgehen, auch als zweite Verbindungsleitungsabschnitte bezeichnet werden.

Die Hauptleitungselemente 6, 6' sind parallel zueinander angeordnet - insbesondere, was die Erstreckung der jeweiligen Verbindungsleitungsabschnitte 7.1, 7.2 bzw. 7.1', 7.2' betrifft. Die Verbindungselemente 8.1, 8.2 sind jeweils gemäß der Darstellung in Figur 3 zu einem gemeinsamen handhabbaren Bauteil bzw. einer entsprechenden Anordnung kombiniert, wobei bei der im hinteren Teil der beiden Figuren befindlichen Anordnung die Verbindungselemente 8.1, 8.2 zwischen oben und unten vertauscht angeordnet sind. Auf diese Weise greift das Hauptleitungselement 6 mit seinen beiden (kurzen) Verbindungsleitungsabschnitten 7.1, 7.2 auf einem selben Höhenniveau H2 und bei einem selben seitlichen Abstand (nicht bezeichnet) in diejenigen Verbindungselemente 8.1, 8.2 ein, die für eine Verbindung mit dem jeweils oberen Fluidanschluss zweier einander gegenüber angeordneter Batteriemodule (nicht gezeigt) bestimmt sind. Entsprechend greift das Hauptleitungselement 6' mit seinen beiden (langen) Verbindungsleitungsabschnitten 7.1', 7.2' auf einem selben Höhenniveau H1 und bei einem selben seitlichen Abstand (nicht bezeichnet) in diejenigen Verbindungselemente 8.1, 8.2 ein, die für eine Verbindung mit dem jeweils unteren Fluidanschluss zweier einander gegenüber angeordneter Batteriemodule (nicht gezeigt) bestimmt sind.

Die an das (erste) Hauptleitungselement 6 angeschlossenen Verbindungselemente 8.1, 8.2 werden vorliegend auch als erste Verbindungselemente bezeichnet, während die an das (zweite) Hauptleitungselement 6' angeschlossenen Verbindungselemente 8.1, 8.2 vorliegend auch als zweite Verbindungselemente bezeichnet werden. Die beiden ersten Verbindungselemente sind demnach unterschiedlich ausgebildet, und auch die beiden zweiten Verbindungselemente weisen eine verschiedene Ausgestaltung auf.

Das eine erste Verbindungselement 8.1 und das andere erste Verbindungselement 8.2 weisen an ihrem einen Ende jeweils eine Anschlussstruktur für ein Batteriemodul bzw. für einen entsprechenden Fluidanschluss auf, welche Anschlussstrukturen auf einem selben (ersten) Höhenniveau H3 angeordnet sind. Das eine zweite Verbindungselement 8.1 und das andere zweite Verbindungselement 8.2 weisen an ihrem einen Ende ebenfalls jeweils eine Anschlussstruktur für ein Batteriemodul bzw. für einen entsprechenden Fluidanschluss auf, welche Anschlussstrukturen auf einem selben (zweiten) Höhenniveau H4 angeordnet sind, wobei das erste Höhenniveau H3 und das zweite Höhenniveau H4 unterschiedlich sind.

Wenn also beispielsweise die beiden oberen Fluidanschlüsse für eine Zufuhr von Temperierfluid zu den Batteriemodulen bestimmt sind, werden auf diese Weise beide mit dem Hauptleitungselement 6 verbunden, wohingegen die beiden unteren Fluidanschlüsse (für eine Abfuhr von Temperierfluid) mit dem Hauptleitungselement 6' verbunden werden.

Die genannten Fluidanschlüsse sind in Figur 4 nur schematisch angedeutet. Dabei bezeichnet Bezugszeichen F1 jeweils den ersten, oberen Fluidanschluss mit Höhenniveau H3, während das Bezugszeichen F2 jeweils den zweiten, unteren Fluidanschluss bezeichnet (mit Höhenniveau H4).

Bei den angesprochenen lösbaren Verbindungen im Bereich der Verbindungselemente 8.1, 8.2 handelt sich vorzugsweise um Steck-/Rastverbindungen, wie dargestellt, die mit entsprechenden Vorsprüngen an den Verbindungsleitungsabschnitten 7.1, 7.2 bzw. 7.1', 7.2' zusammenwirken.

Verfahrenstechnisch können auf diese Weise zunächst die Verbindungselemente 8.1, 8.2 jeweils paarweise mit den beiden Fluidanschlüssen eines betreffenden Batteriemoduls verbunden werden (jedes Verbindungselement 8.1, 8.2 mit einem Fluidanschluss). Anschließend werden die Hauptleitungselemente 6, 6' von oben mit ihren jeweiligen Verbindungsleitungsabschnitten 7.1, 7.2 bzw. 7.1', 7.2' in die zugehörigen Anschlussenden eingesteckt. Die Hauptleitungselemente 6, 6' können anschließend mit weiteren Hauptleitungselementen weiterer Knotenelemente fluidleitend verbunden werden, um ein vollständiges Fluidverteilungssystem zu schaffen.

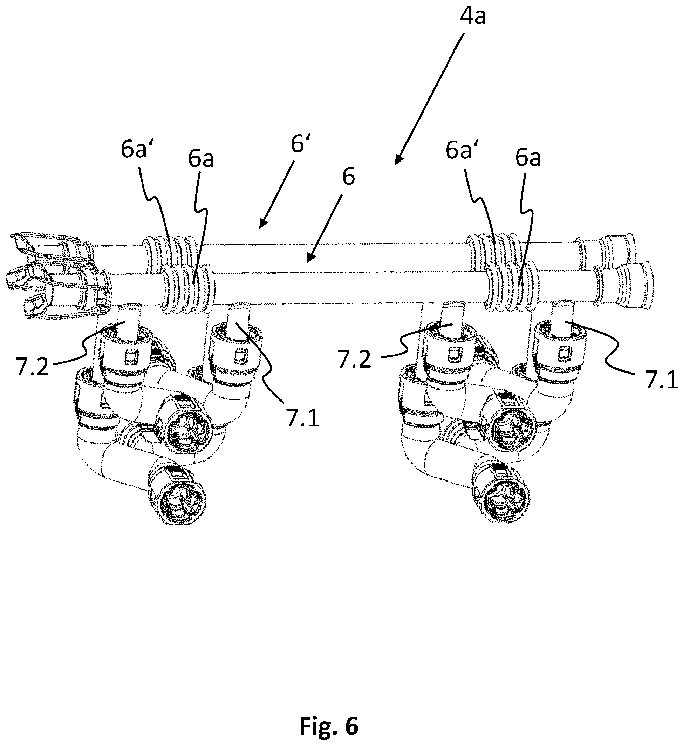

Figur 6 ist ein leicht abgewandeltes Knotenelement dargestellt, welches dem Knotenelement 4a aus Figur 1 entspricht. Es unterscheidet sich von dem Knotenelement gemäß den Figuren 4 und 5 nur dadurch, dass von dem jeweiligen Hauptleitungselement 6, 6' nicht nur zwei, sondern jeweils vier Verbindungsleitungsabschnitte 7.1, 7.2 (aus Gründen der Übersichtlichkeit nur teilweise bezeichnet) abzweigen. Dazwischen ist jeweils wieder ein flexibler Leitungsabschnitt 6a, 6a' angeordnet. Entsprechend ist auch die Anzahl eingesetzter Verbindungselemente 8.1, 8.2 (in Figur 6 nicht bezeichnet) gegenüber der Darstellung in den Figuren 4 und 5 verdoppelt.

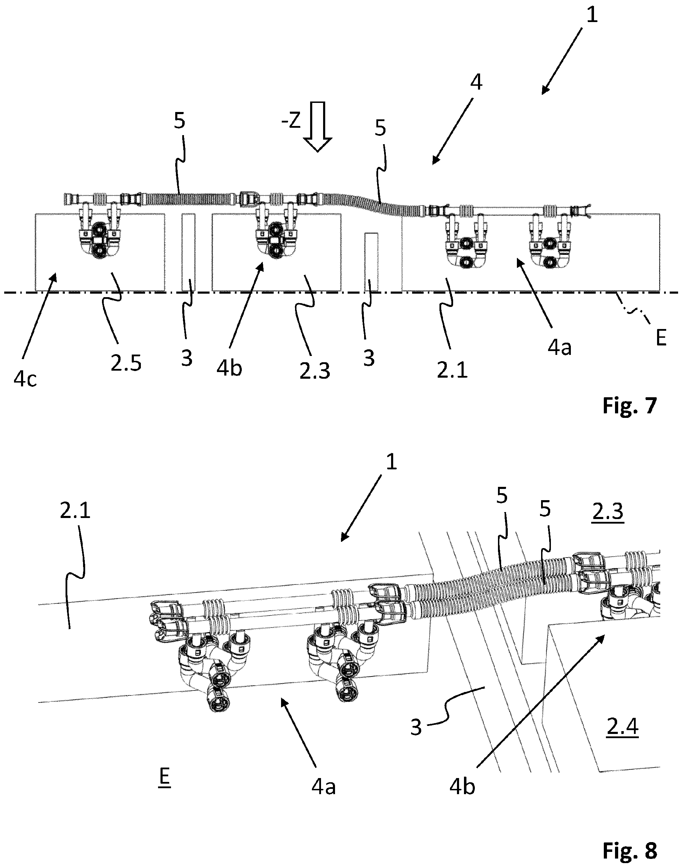

In Figur 7 und Figur 8 ist in Anlehnung an die Darstellung in Figur 1 gezeigt, wie ein erfindungsgemäßes Fluidverteilungssystem 4 aufgrund der verwendeten flexiblen Leitungselemente 5 dazu genutzt werden kann, Höhenunterschiede zwischen den verwendeten Batteriemodulen auszugleichen. Gleiches gilt für seitlichen Versatz (nicht gezeigt).

Außerdem ermöglichen insbesondere die verwendeten flexiblen Leitungselemente 5 den Austausch einzelner Batteriemodule ohne Demontage des kompletten Fluidverteilungssystems 4.

Die Batteriemodule 2.1-2.6 (vgl. auch Figur 1) sind speziell gemäß Figur 7 in einer Konfiguration in einer gemeinsamen Ebene E angeordnet. Die Verbindungselemente und/oder die Hauptleitungselemente (vgl. Figuren 3 bis 6) werden bevorzugt senkrecht zu der Ebene E in Richtung des Pfeils -Z von oben in einen Bereich zwischen den einander gegenüberliegenden Batteriemodulen 2.1-2.6 eingebracht. Danach erfolgt die Verbindung in Querrichtung mittels der flexiblen Leitungselemente 5.

Die Erfindung ist nicht auf eine Verwendung bei Batteriemodulen mit übereinander angeordneten Fluidanschlüssen beschränkt. Wenn die Fluidanschlüssen nebeneinander oder anderweitig versetzt liegen, wird der Fachmann speziell eine (Krümmungs-) Geometrie der Verbindungselemente anpassen, um die besonderen Vorteile der Erfindung weiter nutzen zu können.

Außerdem ist es im Rahmen der vorliegenden Erfindung möglich, die ersten und zweiten Hauptleitungselemente als Gleichteile, d.h. mit gleichen langen Verzweigungsleitungsabschnitten auszubilden. Dann kann eine entsprechende Anpassung der Verbindungselemente erforderlich sein, die somit möglicherweise jeweils unterschiedlich ausfallen, wie der Fachmann leicht erkennt. Kosten und Nutzen einer solchen Abwandlung sind hierbei entsprechend abzuwägen.

## Patentansprüche

1. Fluidverteilungssystem (4) für eine Batteriemodulanordnung (1) mit einer Anzahl von Batteriemodulen (2.1-2.6), bei der die Batteriemodule (2.1-2.6) jeweils wenigstens einen ersten Fluidanschluss (F1) und jeweils wenigstens einen zweiten Fluidanschluss (F2) aufweisen, welches Fluidverteilungssystem (4) aufweist:
ein erstes Hauptleitungselement (6), von dem wenigstens ein erster Verzweigungsleitungsabschnitt (7.1) abzweigt, vorzugsweise rechtwinklig;
ein zweites Hauptleitungselement (6'), von dem wenigstens ein zweiter Verzweigungsleitungsabschnitt (7.1') abzweigt, vorzugsweise rechtwinklig;
ein erstes Verbindungselement (8.1), das mit dem Verzweigungsleitungsabschnitt (7.1) des ersten Hauptleitungselements (6) lösbar verbunden oder verbindbar ist;
ein zweites Verbindungselement (8.2), das mit dem Verzweigungsleitungsabschnitt (7.1') des zweiten Hauptleitungselements (6') lösbar verbunden oder verbindbar ist;
welches erste Verbindungselement (8.1) eine erste Krümmung aufweist, um eine Verlaufsrichtung des ersten Verzweigungsleitungsabschnitts (7.1) an eine Verlaufsrichtung des ersten Fluidanschlusses (F1) anzugleichen;
welches zweite Verbindungselement (8.2) eine zweite Krümmung aufweist, um eine Verlaufsrichtung des zweiten Verzweigungsleitungsabschnitts (7.1') an eine Verlaufsrichtung des zweiten Fluidanschlusses (F2) anzugleichen;
**gekennzeichnet durch**
wenigstens ein flexibles Leitungselement (5), vorzugsweise Wellschlauch, das zum lösbaren Verbinden zweiter erster oder zweiter Hauptleitungselemente (6, 6') bestimmt und ausgebildet ist.

2. Fluidverteilungssystem (4) nach Anspruch 1, bei dem
das erste Hauptleitungselement (6) und/oder das zweite Hauptleitungselement (6') an seinen Enden (6b, 6c) Anschlussstrukturen (6d, 6e) zum lösbaren Verbinden mit jeweils einem weiteren Hauptleitungselement (6, 6') aufweisen, vorzugsweise unterschiedliche, höchst vorzugsweise zueinander komplementäre Anschlussstrukturen.

3. Fluidverteilungssystem (4) nach Anspruch 1 oder 2, bei dem
das erste Hauptleitungselement (6) und das zweite Hauptleitungselement (6') mitsamt dem jeweiligen Verzweigungsleitungsabschnitt (7.1, 7.2, 7.1', 7.2') in einem Metall ausgebildet ist, vorzugsweise Stahl, höchst vorzugsweise Edelstahl, und bei dem
das erste Verbindungselement (8.1) und das zweite Verbindungselement (8.2) in einem Kunststoff ausgebildet ist, vorzugsweise einem spritzgießfähigen Kunststoff.

4. Fluidverteilungssystem (4) nach einem der Ansprüche 1 bis 3, bei dem das erste Hauptleitungselement (6) wenigstens zwei erste Verzweigungsleitungsabschnitte (7.1, 7.2) und das zweite Hauptleitungselement (6') wenigstens zwei zweite Verzweigungsleitungsabschnitte (7.1', 7.2') aufweist.

5. Fluidverteilungssystem (4) nach Anspruch 4, bei dem
zwischen einer jeweiligen Abzweigung der beiden ersten Verzweigungsleitungsabschnitte (7.1, 7.2) und/oder der beiden zweiten Verzweigungsleitungsabschnitte (7.1', 7.2') ein flexibler Leitungsabschnitt (6a, 6a') des betreffenden Hauptleitungselements (6, 6') angeordnet ist, insbesondere ein gewellter Abschnitt, höchst vorzugsweise ringgewellt.

6. Fluidverteilungssystem (4) nach Anspruch 4 oder 5, bei dem
jeder der ersten Verzweigungsleitungsabschnitte (7.1, 7.2) mit einem jeweiligen ersten Verbindungselement (8.1, 8.2) lösbar verbunden oder verbindbar ist und bei dem jeder der zweiten Verzweigungsleitungsabschnitte (7.1', 7.2') mit einem jeweiligen zweiten Verbindungselement (8.1, 8.2) lösbar verbunden oder verbindbar ist.

7. Fluidverteilungssystem (4) nach Anspruch 6, bei dem
das eine erste Verbindungselement (8.1) und das andere erste Verbindungselement (8.2) an ihrem einen Ende jeweils eine Anschlussstruktur für ein Batteriemodul (2.1-2.6) aufweisen, welche Anschlussstrukturen auf einem selben ersten Höhenniveau (H3) angeordnet sind; und
das eine zweite Verbindungselement (8.2) und das andere zweite Verbindungselement (8.1) an ihrem einen Ende jeweils eine Anschlussstruktur für ein Batteriemodul (2.1-2.6) aufweisen, welche Anschlussstrukturen auf einem selben zweiten Höhenniveau (H4) angeordnet sind;
wobei vorzugsweise das erste Höhenniveau (H3) und das zweite Höhenniveau (H4) unterschiedlich sind.

8. Fluidverteilungssystem (4) nach Anspruch 7, bei dem
das eine erste Verbindungselement (8.1) und das andere erste Verbindungselement (8.2) an ihrem anderen Ende jeweils eine Anschlussstruktur für einen Verzweigungsleitungsabschnitt (7.1, 7.2) aufweisen, welche Anschlussstrukturen auf einem selben dritten Höhenniveau (H2) angeordnet sind; und
das eine zweite Verbindungselement (8.2) und das andere zweite Verbindungselement (8.1) an ihrem anderen Ende jeweils eine Anschlussstruktur für einen Verzweigungsleitungsabschnitt (7.1', 7.2') aufweisen, welche Anschlussstrukturen auf einem selben vierten Höhenniveau (H1) angeordnet sind;
wobei vorzugsweise das dritte Höhenniveau (H2) und das vierte Höhenniveau (H1) unterschiedlich sind.

9. Fluidverteilungssystem (4) nach einem der Ansprüche 6 bis 8, bei dem das eine erste Verbindungselement (8.1) und das eine zweite Verbindungselement (8.2) zu einer gemeinsam handhabbaren Einheit miteinander verbunden oder verbindbar sind; und/oder
das andere erste Verbindungselement (8.2) und das andere zweite Verbindungselement (8.1) zu einer gemeinsam handhabbaren Einheit miteinander verbunden oder verbindbar sind.

10. Fluidverteilungssystem (4) nach einem der Ansprüche 6 bis 9, bei dem eines der beiden ersten Verbindungselemente (8.1, 8.2) und eines der beiden zweiten Verbindungselemente (8.1, 8.2) als Gleichteile ausgebildet sind; und/oder
das andere der beiden ersten Verbindungselemente (8.1, 8.2) und das andere der beiden zweiten Verbindungselemente (8.1, 8.2) als Gleichteile ausgebildet sind.

11. Batteriemodulanordnung (1) mit einer Anzahl von Batteriemodulen (2.1-2.6), deren Fluidanschlüsse (F1, F2) an ein Fluidleitungssystem (4) nach einem der Ansprüche 1 bis 10 angeschlossen sind, wobei vorzugsweise ein jeweiliger erster Fluidanschluss (F1) mit dem ersten Hauptleitungselement (6) und ein jeweiliger zweiter Fluidanschluss (F2) mit dem zweiten Hauptleitungselement (6') verbunden ist, höchst vorzugsweise mit mehreren Batteriemodulen (2.1-2.6), die einander paarweise gegenüberliegend angeordnet sind, wobei die Fluidanschlüsse (F1, F2) jeweils aufeinander zu weisen.

12. Batteriemodulanordnung (1) nach Anspruch 11, bei dem
mehrere Batteriemodule (2.1-2.6) in einer Ebene angeordnet sind und zumindest einige der Batteriemodule (2.1-2.6) unterschiedlich Abmessungen in einer Richtung parallel zu der Ebene und/oder senkrecht zu der Ebene aufweisen, wobei ein Versatz zwischen der betreffenden ersten und zweiten Hauptleitungselementen (6, 6') mittels flexiblen Leitungselementen (5) ausgeglichen ist.

13. Verfahren zum fluidleitenden Verbinden von Batteriemodulen (2.1-2.6) in einer Batteriemodulanordnung (1) gemäß Anspruch 11 oder 12, bei dem
a) die Batteriemodule (2.1-2.6) in einer dafür vorgesehenen Aufnahmestruktur (3) angeordnet werden und vorzugsweise elektrisch miteinander verbunden werden; dann
b) die Fluidanschlüsse (F1, F2) der Batteriemodule (2.1-2.6) mit den jeweiligen Verbindungselementen (8.1, 8.2) verbunden werden; dann
c) die Hauptleitungselemente (6, 6') über ihre Verzweigungsleitungsabschnitte (7.1, 7.2, 7.1', 7.2') mit den betreffenden Verbindungselementen (8.1, 8.2) verbunden werden; und dann
d) die Hauptleitungselemente (6, 6') untereinander verbunden werden, vorzugsweise mittels flexibler Leitungselemente (5).

14. Verfahren nach Anspruch 13, bei dem
die Batteriemodule (2.1-2.6) in einer Konfiguration einander paarweise gegenüberliegen, wobei die Fluidanschlüsse (F1, F2) jeweils aufeinander zu weisen, in einer Ebene angeordnet werden; und
die Verbindungselemente (8.1, 8.2) in Schritt b) und/oder die Hauptleitungselemente (6, 6') in Schritt c) senkrecht zu der Ebene in einen Bereich zwischen den einander gegenüberliegenden Batteriemodulen (2.1-2.6) eingebracht werden.

## Claims

1. Fluid distribution system (4) for a battery module assembly (1) with a number of battery modules (2.1-2.6), in which the battery modules (2.1-2.6) each have at least one first fluid connector (F1) and each have at least one second fluid connector (F2), which fluid distribution system (4) has:
a first main line element (6) from which at least one first branch line portion (7.1) branches off, preferably at right angles; a second main line element (6') from which at least one second branch line portion (7.1') branches off, preferably at right angles;
a first connection element (8.1) which is detachably connected or connectable to the branch line portion (7.1) of the first main line element (6);
a second connection element (8.2) which is detachably connected or connectable to the branch line portion (7.1') of the second main line element (6');
which first connection element (8.1) has a first curvature to match a routing direction of the first branch line portion (7.1) to a routing direction of the first fluid connector (F1);
which second connection element (8.2) has a second curvature to match a routing direction of the second branch line portion (7.1') to a routing direction of the second fluid connector (F2);
**characterized by**
at least one flexible line element (5), preferably a corrugated hose, which is intended and made for the detachable connection of second first or second main line elements (6, 6').

2. Fluid distribution system (4) according to claim 1, wherein
the first main line element (6) and/or the second main line element (6') have at their ends connector structures (6d, 6e) for detachable connection to a respective further main line element (6, 6'), preferably different, most preferably connector structures complementary to each other.

3. Fluid distribution system (4) according to claim 1 or claim 2, wherein
the first main line element (6) and the second main line element (6'), together with the respective branch line portion (7.1, 7.2, 7.1', 7.2'), are made of metal, preferably steel, most preferably stainless steel, and wherein
the first connection element (8.1) and the second connection element (8.2) are made of a plastic, preferably an injection moldable plastic.

4. Fluid distribution system (4) according to any one of claims 1 to 3, wherein
the first main line element (6) has at least two first branch line portions (7.1, 7.2), and the second main line element (6') has at least two second branch line portions (7.1', 7.2').

5. Fluid distribution system (4) according to claim 4, wherein
between a respective branch of the two first branch line portions (7.1, 7.2) and/or the two second branch line portions (7.1', 7.2') a flexible line portion (6a, 6a') of the respective main line element (6, 6') is arranged, in particular a corrugated section, most preferably ring-corrugated.

6. Fluid distribution system (4) according to claim 4 or claim 5, wherein
each of the first branch line portions (7.1, 7.2) is detachably connected or connectable to a respective first connection element (8.1, 8.2), and wherein each of the second branch line portions (7.1', 7.2') is detachably connected or connectable to a respective second connection element (8.1, 8.2).

7. Fluid distribution system (4) according to claim 6, wherein
the one first connection element (8.1) and the other first connection element (8.2) each have, at one end thereof, a connector structure for a battery module (2.1-2.6), which connector structures are arranged at the same first height level (H3); and
the one second connection element (8.2) and the other second connection element (8.1) each have, at one end thereof, a connector structure for a battery module (2.1-2.6), which connector structures are arranged at the same second height level (H4);
wherein preferably the first height level (H3) and the second height level (H4) are different.

8. Fluid distribution system (4) according to claim 7, wherein
the one first connection element (8.1) and the other first connection element (8.2) each have, at their other end, a connector structure for a branch line portion (7.1, 7.2), which connector structures are arranged at the same third height level (H2); and
the one second connection element (8.2) and the other second connection element (8.1) each have, at their other end, a connector structure for a branch line portion (7.1', 7.2'), which connector structures are arranged at the same fourth height level (H1);
wherein preferably the third height level (H2) and the fourth height level (H1) are different.

9. Fluid distribution system (4) according to any one of claims 6 to 8, wherein
the one first connection element (8.1) and the one second connection element (8.2) are connected or connectable to one another to form a jointly manageable unit; and/or
the other first connection element (8.2) and the other second connection element (8.1) are connected or connectable to one another to form a jointly manageable unit.

10. Fluid distribution system (4) according to any one of claims 6 to 9, wherein
one of the two first connection elements (8.1, 8.2) and one of the two second connection elements (8.1, 8.2) are made as identical parts; and/or
the other of the two first connection elements (8.1, 8.2) and the other of the two second connection elements (8.1, 8.2) are made as identical parts.

11. Battery module assembly (1) with a number of battery modules (2.1-2.6), the fluid connectors (F1, F2) of which are connected to a fluid distribution system (4) according to any one of claims 1 to 10, wherein preferably a respective first fluid connector (F1) is connected to the first main line element (6) and a respective second fluid connector (F2) is connected to the second main line element (6'), most preferably to multiple battery modules (2. 1-2.6), which are arranged opposite one another in pairs, wherein the fluid connectors (F1, F2) each face one another.

12. Battery module assembly (1) according to claim 11, wherein
multiple battery modules (2.1-2.6) are arranged in a plane and at least some of the battery modules (2.1-2.6) have different dimensions in a direction parallel to the plane and/or perpendicular to the plane, wherein an offset between the respective first and second main line elements (6, 6') is compensated for by means of flexible line elements (5).

13. Method for the fluid-conducting connection of battery modules (2.1-2.6) in a battery module assembly (1) according to claim 11 or claim 12, in which
a) the battery modules (2.1-2.6) are arranged in a receiving structure (3) provided for this purpose and are preferably connected to one another electrically; then
b) the fluid connectors (F1, F2) of the battery modules (2.1-2.6) are connected to the respective connection elements (8.1, 8.2); then
c) the main line elements (6, 6') are connected via their branch line portions (7.1, 7.2, 7.1', 7.2') to the respective connection elements (8.1, 8.2); and then
d) the main line elements (6, 6') are connected to one another, preferably by means of flexible line elements (5).

14. Method according to claim 13, wherein
the battery modules (2.1-2.6) are arranged in a configuration facing each other in pairs, wherein the fluid connectors (F1, F2) each face one another, in one plane; and
the connecting elements (8.1, 8.2) in step b) and/or the main line elements (6, 6') in step c) are inserted perpendicular to the plane into an area between the battery modules (2.1-2.6) that are facing one another.

## Revendications

1. Système de distribution de fluide (4) pour un agencement de modules de batterie (1) avec un nombre de modules de batterie (2.1-2.6), pour lequel les modules de batterie (2.1-2.6) présentent respectivement au moins un premier raccord de fluide (F1) et respectivement au moins un second raccord de fluide (F2), lequel système de distribution de fluide (4) présente :
un premier élément de conduite principale (6) duquel bifurque au moins une première section de conduite de dérivation (7.1), de préférence à angle droit ; un second élément de conduite principale (6') duquel bifurque au moins une seconde section de conduite de dérivation (7.1'), de préférence à angle droit ;
un premier élément de liaison (8.1) qui est ou peut être relié de manière amovible à la section de conduite de dérivation (7.1) du premier élément de conduite principale (6) ;
un second élément de liaison (8.2) qui est ou peut être relié de manière amovible à la section de conduite de dérivation (7.1') du second élément de conduite principale (6') ;
lequel premier élément de liaison (8.1) présente une première courbure afin d'ajuster une direction d'étendue de la première section de conduite de dérivation (7.1) à une direction d'étendue du premier raccord de fluide (F1) ;
lequel second élément de liaison (8.2) présente une seconde courbure afin d'ajuster une direction d'étendue de la seconde section de conduite de dérivation (7.1') à une direction d'étendue du second raccord de fluide (F2) ;
**caractérisé par**
au moins un élément de conduite (5) flexible, de préférence un tuyau ondulé flexible qui est destiné et formé pour la liaison amovible des premiers ou seconds éléments de conduite principale (6, 6').

2. Système de distribution de fluide (4) selon la revendication 1, pour lequel
le premier élément de conduite principale (6) et/ou le second élément de conduite principale (6') présentent à ses extrémités (6b, 6c) des structures de raccordement (6d, 6e) pour la liaison amovible avec respectivement un autre élément de conduite principale (6, 6'), de préférence différentes, le plus préférentiellement des structures de raccordement complémentaires l'une à l'autre.

3. Système de distribution de fluide (4) selon la revendication 1 ou 2, pour lequel
le premier élément de conduite principale (6) et le second élément de conduite principale (6') sont formés avec la section de conduite de dérivation (7.1, 7.2, 7.1', 7.2') respective en un métal, de préférence en acier, le plus préférentiellement en acier spécial, et pour lequel
le premier élément de liaison (8.1) et le second élément de liaison (8.2) sont réalisés en une matière plastique, de préférence en une matière plastique pouvant être coulée par injection.

4. Système de distribution de fluide (4) selon l'une quelconque des revendications 1 à 3, pour lequel
le premier élément de conduite principale (6) présente au moins deux premières sections de conduite de dérivation (7.1, 7.2), et le second élément de conduite principale (6') présente au moins deux secondes sections de conduite de dérivation (7.1', 7.2').

5. Système de distribution de fluide (4) selon la revendication 4, pour lequel
une section de conduite (6a, 6a') flexible de l'élément de conduite principale (6, 6') concerné est disposée entre une bifurcation respective des deux premières sections de conduite de dérivation (7.1, 7.2) et/ou des deux secondes sections de conduite de dérivation (7.1', 7.2'), en particulier une section ondulée, le plus préférentiellement à ondulation annulaire.

6. Système de distribution de fluide (4) selon la revendication 4 ou 5, pour lequel
chacune des premières sections de conduite de dérivation (7.1, 7.2) est ou peut être reliée de manière amovible à un premier élément de liaison (8.1, 8.2) respectif et pour lequel chacune des secondes sections de conduite de dérivation (7.1', 7.2') est ou peut être reliée de manière amovible à un second élément de liaison (8.1, 8.2) respectif.

7. Système de distribution de fluide (4) selon la revendication 6, pour lequel
l'un premier élément de liaison (8.1) et l'autre premier élément de liaison (8.2) présentent à leur une extrémité respectivement une structure de raccordement pour un module de batterie (2.1-2.6), lesquelles structures de raccordement sont disposées à un même premier niveau de hauteur (H3) ; et
l'un second élément de liaison (8.2) et l'autre second élément de liaison (8.1) présentent à leur une extrémité respectivement une structure de raccordement pour un module de batterie (2.1-2.6), lesquelles structures de raccordement sont disposées à un même deuxième niveau de hauteur (H4) ; et
dans lequel le premier niveau de hauteur (H3) et le deuxième niveau de hauteur (H4) sont de préférence différents.

8. Système de distribution de fluide (4) selon la revendication 7, pour lequel
l'un premier élément de liaison (8.1) et l'autre premier élément de liaison (8.2) présentent à leur autre extrémité respectivement une structure de raccordement pour une section de conduite de dérivation (7.1, 7.2), lesquelles structures de raccordement sont disposées à un même troisième niveau de hauteur (H2) ; et
l'un second élément de liaison (8.2) et l'autre second élément de liaison (8.1) présentent à leur autre extrémité respectivement une structure de raccordement pour une section de conduite de dérivation (7.1', 7.2'), lesquelles structures de raccordement sont disposées à un même quatrième niveau de hauteur (H1) ;
dans lequel le troisième niveau de hauteur (H2) et le quatrième niveau de hauteur (H1) sont de préférence différents.

9. Système de distribution de fluide (4) selon l'une quelconque des revendications 6 à 8, pour lequel
l'un premier élément de liaison (8.1) et l'un second élément de liaison (8.2) sont ou peuvent être reliés l'un à l'autre pour former une unité manipulable en commun ; et/ou
l'autre premier élément de liaison (8.2) et l'autre second élément de liaison (8.1) sont ou peuvent être reliés l'un à l'autre pour former une unité manipulable en commun.

10. Système de distribution de fluide (4) selon l'une quelconque des revendications 6 à 9, pour lequel
l'un des deux premiers éléments de liaison (8.1, 8.2) et l'un des deux seconds éléments de liaison (8.1, 8.2) sont formés comme des pièces invariantes ; et/ou
l'autre des deux premiers éléments de liaison (8.1, 8.2) et l'autre des deux seconds éléments de liaison (8.1, 8.2) sont formés comme des pièces invariantes.

11. Agencement de modules de batterie (1) avec un nombre de modules de batterie (2.1-2.6), dont les raccords de fluide (F1, F2) sont raccordés à un système de conduite de fluide (4) selon l'une quelconque des revendications 1 à 10, dans lequel un premier raccord de fluide (F1) respectif est de préférence relié au premier élément de conduite principale (6) et un second raccord de fluide (F2) respectif est de préférence relié au second élément de conduite principale (6'), le plus préférentiellement aux plusieurs modules de batterie (2.1-2.6) qui sont disposés par paires en se faisant face les uns les autres, dans lequel les raccords de fluide (F1, F2) sont tournés respectivement l'un vers l'autre.

12. Agencement de modules de batterie (1) selon la revendication 11, pour lequel
plusieurs modules de batterie (2.1-2.6) sont disposés dans un plan et au moins certains des modules de batterie (2.1-2.6) présentent différentes dimensions dans une direction parallèle au plan et/ou perpendiculairement au plan, dans lequel un déport entre les premier et second éléments de conduite principale (6, 6') concernés est compensé au moyen d'éléments de conduite (5) flexibles.

13. Procédé de liaison fluidique de modules de batterie (2.1-2.6) dans un agencement de modules de batterie (1) selon la revendication 11 ou 12, pour lequel
a) les modules de batterie (2.1-2.6) sont disposés dans une structure de logement (3) prévue à cet effet et sont de préférence reliés électriquement les uns aux autres ; ensuite
b) les raccords de fluide (F1, F2) des modules de batterie (2.1-2.6) sont reliés aux éléments de liaison (8.1, 8.2) respectifs ; ensuite
c) les éléments de conduite principale (6, 6') sont reliés par le biais de leurs sections de conduite de dérivation (7.1, 7.2, 7.1', 7.2') aux éléments de liaison (8.1, 8.2) concernés ; et ensuite
d) les éléments de conduite principale (6, 6') sont reliés l'un à l'autre, de préférence au moyen d'éléments de conduite (5) flexibles.

14. Procédé selon la revendication 13, pour lequel
les modules de batterie (2.1-2.6) se font face les uns les autres par paires dans une configuration, dans lequel les raccords de fluide (F1, F2) sont tournés respectivement l'un vers l'autre, sont disposés dans un plan ; et
les éléments de liaison (8.1, 8.2) à l'étape b) et/ou les éléments de conduite principale (6, 6') à l'étape c) sont introduits perpendiculairement au plan dans une zone entre les modules de batterie (2.1-2.6) se faisant face les uns les autres.
